# EUROPEAN PATENT APPLICATION

(11) **EP 2 189 513 A1**
(43) Date of publication of application: **26.05.2010**
(21) Application number: 08169656.9
(22) Date of filing: 21.11.2008
(51) Int. Cl.: C10G 5/06, C01B 3/24, C01B 3/32, F25J 3/02

(54) **Method for processing gas**

(71) Applicant: Shell Internationale Research Maatschappij B.V., 2596 HR Den Haag (NL)
(72) Inventor: The designation of the inventor has not yet been filed
(74) Representative: Matthezing, Robert Maarten

(57) **Abstract**

The present invention pertains to a method for processing gas containing methane and higher hydrocarbons, comprising the steps of
• partially condensing and expanding a gas containing methane and higher hydrocarbons from a pressure of 70-120 bar to a pressure of 20-35 bar to obtain at least a C₁ fraction and a C₂+ fraction,
• separating the C₂+ fraction from the C₁ fraction,
• separating the C₁ fraction into a first fraction which is brought to a pressure of 20-40 bar and a second fraction which is brought to a pressure of 50-70 bar.

The C₁ fraction brought to a pressure of 20-40 bar can be subjected to a steam methane reforming process. The C₁ fraction brought to a pressure of 50-70 bar can be subjected to a partial oxidation step. It is preferred for the gas containing methane and higher hydrocarbons to be a natural gas.

## Description

The present invention pertains to a method for processing gas containing methane and higher hydrocarbons to form individual fractions suitable for further processing.

Natural gas is a general term that is applied to mixtures of light hydrocarbons and optionally inert gases (nitrogen, carbon dioxide, helium) derived from natural gas wells. The main component of natural gas is methane. Further, often ethane, propane and butane are present. In some cases (small) amounts of higher hydrocarbons may be present, often indicated as natural gas liquids or condensates. When produced together with oil, the natural gas is usually called associated gas.

Burning of associated gas has become an undesirable option in view of depletion of hydrocarbon sources and air pollution. Transportation of gas, for example through a pipeline or in the form of liquefied natural gas, requires extremely high capital expenditure or is simply not practical. This holds true even more in the case of relatively small gas production rates and/or fields. Reinjection of gas will add to the costs of oil production, and may, in the case of associated gas, result in undesired effects on crude oil production.

Various methods are known for the conversion of natural sources, for example natural gas, associated gas and/or coal bed methane, into liquid products, especially methanol and liquid hydrocarbons, particularly paraffinic hydrocarbons. A process often used for the conversion of carbonaceous feedstock into liquid and/or solid hydrocarbons is the well-known Fischer-Tropsch process.

To allow efficient processing of natural gas, methods are required to separate the gas stream into individual streams suitable for further processing along different paths. For example, the C₃/C₄ fraction may be isolated as LPG fraction while the methane fraction is subjected to a gasification step to form syngas comprising hydrogen and CO.

US 5,960,644 describes a method for removing carbon dioxide, ethane and heavier components from high pressure natural gas via a process comprising the steps of subjecting the gas to an expansion/condensation step followed by processing in a fractionation column.

There is need for a method which allows efficient processing of natural gas to form individual fractions suitable for further processing. The process should be flexible to allow for differences in natural gas composition and for differences in downstream needs.

The present invention provides a method for processing a gas containing methane and higher hydrocarbons which solves these problems. Additional advantages associated with the method according to the invention will become evident from the further specification. The process can be applied to natural gas, but also to other gas streams containing methane and higher hydrocarbons, e.g., refinery streams.

The present invention provides a method for processing a gas containing methane and higher hydrocarbons, comprising the steps of
- partially condensing and expanding a gas containing methane and higher hydrocarbons from a pressure of 70-120 bar to a pressure of 20-35 bar to obtain at least a C₁ fraction and a C₂+ fraction,
- separating the C₂+ fraction from the C₁ fraction,
- separating the C₁ fraction into a first fraction which is brought to a pressure of 20-40 bar and a second fraction which is brought to a pressure of 50-70 bar.

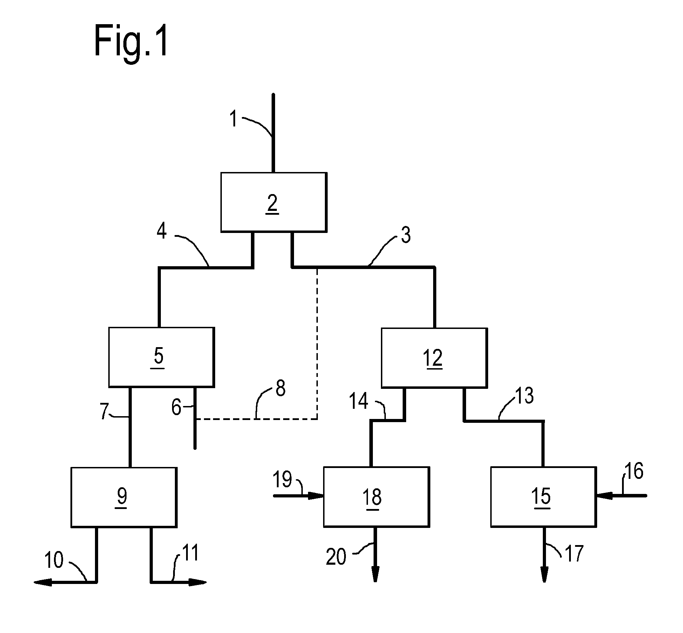

The present invention will be described in detail and by way of example only with reference to the accompanying drawing. Figure 1 provides a first embodiment of the process according to the invention.

In the process according to the invention, the C₁ fraction is separated into a lower pressure fraction and a higher pressure fraction. Both fractions can be further processed to form synthesis gas (syngas) in a different manner at a pressure in the stipulated range. This allows efficient use of the gas and of the resources required to bring it at the stipulated pressure. Further, the separation of the C₂+ fraction from the C₁ fraction makes is possible to obtain syngas with a higher H₂/CO ratio than could otherwise be obtained.

The gas containing methane and higher hydrocarbon used as starting material in the process according to the invention is at a pressure of 70-120 bar. The gas may be natural gas, or a process-gas. Within the context of the present specification the wording process gas pertains to a gas containing methane and higher hydrocarbon which is not a natural gas. The invention is of particular interest for processing natural gas.

The gas, in particular the natural gas, suitable for use in the present invention comprises hydrocarbon molecules with one carbon atom, further indicated as C₁, in particular methane, hydrocarbon molecules with two carbon atoms, further indicated as C₂, in particular ethane, and generally higher hydrocarbon molecules, further indicated as C₃+. The gas stream preferably is a hydrocarbonaceous gas stream comprising at least 50% by volume of C₁-C₄ hydrocarbons, more preferably at least 90% by volume.

The amount of C₁ compound present in the gas treated is generally between 60 and 99.9 vol.%, more in particular between 80 and 95 vol.%. The amount of C₂-C₄-compounds present in the gas is generally between 1 and 30 vol% of the total stream, more in particular between 3 and 20 vol%. For example, ethane may be present in amounts between 1 and 15 vol% of the total stream, in particular between 2 and 10 vol%. For a further example, propane may be present in amounts between 0 and 10 vol% based on total stream, more in particular between 1 and 6 vol%. For a further example, butane may be present in amounts between 0 and 5 vol% based on total stream, more in particular between 0.2 and 3 vol%. For a further example, the amount of C₅+ compounds may be between 0 and 5 vol%, more in particular between 0 and 3 vol%, based on total stream.

Nitrogen may be present in the feed gas stream in an amount of 0 to 20 vol% based on total stream, especially between 1 and 12 vol%. The nitrogen will end up in the methane or methane/ethane stream. In one embodiment the nitrogen is separated from the methane in order to minimize the amount of inerts in the syngas. Separating out the nitrogen can be carried out in a manner known in the art.

The first step of the process according to the invention is partially condensing and expanding the gas from a pressure of 70-120 bar to a pressure of 20-35 bar. This can be done, e.g., through adiabatic expansion. This process can, for example be carried out in the form of a cryogenic distillation step. This could operate at a temperature in the range -10 and -80°C, especially in the range of -20 to -50°C.

In the process according to the invention several cryogenic distillation units may be used. For instance, in a first unit methane may be removed, in a second unit ethane may be removed, in a third unit propane may be removed and in a fourth unit butane may be removed from the remaining C₅+-hydrocarbons. It is also possible to combine e.g. the first and the second unit, optionally followed by the separation of methane and ethane. Also the third and fourth unit may be combined, optionally followed by the separation of propane and butane. It is also possible to first remove the C5+ hydrocarbons, followed by separation.

The C₂+ fraction can be processed in a number of ways.

In one embodiment of the present invention, the C₂+ fraction is subjected to a separation step to form a C₂ fraction and a C₃+ fraction. The C₂ fraction generally consists for at least 85% of ethane, calculated on the total volume of the gas stream. Separating the C₂+ fraction to form a C₂ fraction and a C₃+ fraction can be carried out in a manner conventional in the art, for example via distillation.

In one embodiment, the C₂ fraction is fed to a cracker where it is converted to ethene. C₂ cracking is well known in the art, and requires no further elucidation here.

In another embodiment, in particular where no C₂ cracker is available, the C₂ fraction is combined with the C₁ fraction and processed together with the C₁ fraction as will be described in more detail below.

In another embodiment of the present invention, the C₂+ fraction is fed to a cracker to form ethene and, where the C₂+ fraction contains C₃, propene. This embodiment may be attractive where the C₂+ fraction contains relatively small amounts of C₃+ compounds, so that separating out the C₃+ compounds is not attractive.

Where a C₃+ fraction is obtained in the process according to the invention, it can again be processed in various ways.

In one embodiment, the C₃+ fraction is subjected to a separation step to form a C₃-C₄ fraction and a C₅+ fraction. The C₃-C₄ fraction can, for example, be sent to the LPG pool; the C₅+ fraction can be sent to the gasoline or middle distillate pool. The separation step can be carried out in any manner known in the art, e.g., in distillation columns.

In one embodiment, the C₁ fraction will consist for at least 85% of methane.

The C₁ fraction is divided into a first fraction which is brought to a pressure of 20-40 bar and a second fraction which is brought to a pressure of 50-70 bar. Generally, 5-40% of the C₁ fraction is brought to a pressure of 20-40 bar and 95-60% of the C₁ fraction is brought to a pressure of 50-70 bar. The separation may be carried out in a manner known in the art, e.g., using a splitter. The fractions may be brought to the stipulated pressure in any manner known in the art, e.g., using compressors.

In one embodiment, the C₁ fraction that is brought to a pressure of 20-40 bar is further processed in a steam methane reforming process, where it is reacted at the stipulated pressure with water in the presence of a catalyst at a temperature of 700-1100°C to form CO and hydrogen.

Steam reforming processes are known in the art. They may, for example, be carried out in a convective steam reactor zone which comprises a tubular reactor vessel provided with one or more tubes containing a reforming catalyst. Suitable catalysts comprise a Group VIII metal, preferably a Group VIII metal selected from one or more of Pt, Ni, Pd and Co. The use of platinum or nickel may be particularly preferred. Optionally, the catalyst may be present on an oxidic support material in an amount which is generally between 0.1 and about 7.0 wt %. Suitable oxidic support materials are known in the art. They encompass, for example, alumina and zirconia.

The space velocity of the gaseous feed is preferably from 700 to 1000 litre (S.T.P.)/litre catalyst/hour, wherein S.T.P. means Standard Temperature of 15°C. and pressure of 1 bar abs. The steam to carbon (as hydrocarbon and CO) molar ratio is preferably from 0.01 up to 2.5 and more preferably below 1 and most preferably from 0.5 up to 0.9.

The product gas of the steam reforming process preferably has a H₂/CO molar ratio of from 0.5 up to 2.5.

In one embodiment, the C₁ fraction brought to a pressure of 50-70 bar is subjected to a partial oxidation step where it is reacted at the stipulated pressure with oxygen to form CO and hydrogen.

The partial oxidation may be performed according to well known principles as for example described for the Shell Gasification Process in the Oil and Gas Journal, Sep. 6, 1971, pp 85-90. In a partial oxidation process a hydrocarbon feed is contacted with an oxygen containing gas under partial oxidation conditions preferably in the absence of a catalyst. In one embodiment the oxygen containing gas is be air (containing about 21 percent of oxygen). In a preferred embodiment, the oxygen-containing gas is oxygen enriched air, suitably containing up to 100 percent of oxygen, preferably containing at least 60 volume percent oxygen, more preferably at least 80 volume percent, more preferably at least 98 volume percent of oxygen. Contacting the feed in a partial oxidation step with an oxygen containing gas is preferably performed in a burner placed in a reactor vessel. To adjust the H₂/CO ratio in the gaseous product obtained in the partial oxidation reaction, carbon dioxide and/or steam may be introduced into the feed. Preferably up to 15% volume based on the amount of gaseous product, preferably up to 8% volume, more preferably up to 4% volume, of either carbon dioxide or steam is added to the feed. As a suitable steam source, water produced in an optional downstream hydrocarbon synthesis may be used. The gaseous product of the partial oxidation reaction preferably has a temperature of between 1100 and 1500°C and an H₂/CO molar ratio of from 1.5 up to 2.6, preferably from 1.6 up to 2.2.

The syngas streams manufactured in the steam reforming process and the partial oxidation process may be processed by methods known in the art, e.g., by feeding either one or both of them to a Fisher Tropsch process.

One embodiment of the process according to the invention is illustrated in Figure 1.
In Figure 1, a gas steam, in particular a natural gas stream, (1) with a pressure in the range of 70-120 bar is fed to a separator (2), where the pressure is reduced to a value of 20-35 bar. Separator (2) produces a C₁ fraction (3) and a C₂+ fraction (4), both at a pressure of 20-35 bar. The C₂+ fraction (4) is fed to a separator (5), which produces a C₂ fraction (6) and a C₃+ fraction (7). The C₂ fraction (6) may be combined with C₁ fraction (3) (dotted line (8)), but it may also be processed separately. The C₃+ fraction (7) may be led to a further separator (9), from which a C₃/C₄ fraction (10) and a C₅+ fraction (11) are obtained. C₁ fraction (3), whether or not combined with C₂ fraction (6), is fed to a splitter (12), where it is split and subjected to a pressure reduction step to form a first fraction (13) which is at a pressure of 20-40 bar and a second fraction (14) which is at a pressure of 50-70 bar. The first fraction (13) is fed to a steam reforming step (15), where it is reacted with water (16) to form a first syngas stream (17). The second fraction (14) is fed to a partial oxidation step (18), where it is reacted with an oxygen-containing gas (19) to form a second syngas stream (20).

## Claims

1. Method for processing gas containing methane and higher hydrocarbons, comprising the steps of
• partially condensing and expanding a gas containing methane and higher hydrocarbons from a pressure of 70-120 bar to a pressure of 20-35 bar to obtain at least a C₁ fraction and a C₂+ fraction,
• separating the C₂+ fraction from the C₁ fraction,
• separating the C₁ fraction into a first fraction which is brought to a pressure of 20-40 bar and a second fraction which is brought to a pressure of 50-70 bar.

2. Method according to claim 1 wherein the C₂+ fraction is separated to form a C₂ fraction and a C₃+ fraction.

3. Method according to claim 2 wherein the C₃+ fraction is separated to form a C₃-C₄ fraction and a C₅+ fraction.

4. Method according to claim 2 or 3 wherein the C₂ fraction is fed to a cracker to be converted to ethylene.

5. Method according to claim 2 or 3 where the C₂ fraction is combined with the C₁ fraction before the C₁ fraction is separated into a first fraction which is brought to a pressure of 20-40 bar and a second fraction which is brought to a pressure of 50-70 bar.

6. Method according to any one of the preceding claims, wherein 5-40% of the C₁ fraction is brought to a pressure of 20-40 bar and 95-60% of the C₁ fraction is brought to a pressure of 50-70 bar.

7. Method according to any one of the preceding claims wherein the C₁ fraction brought to a pressure of 20-40 bar is subjected to a steam methane reforming process, where it is reacted at the stipulated pressure with water in the presence of a catalyst at a temperature of 700-1100°C to form CO and hydrogen.

8. Method according to any one of the preceding claims wherein the C₁ fraction brought to a pressure of 50-70 bar is subjected to a partial oxidation step where it is reacted at the stipulated pressure with oxygen to form CO and hydrogen.

9. Method according to any one of the preceding claims wherein the gas containing methane and higher hydrocarbons is a natural gas.
